# EUROPÄISCHE PATENTSCHRIFT

(11) **EP 3 079 969 B1**
(45) Veröffentlichungstag und Bekanntmachung des Hinweises auf die Patenterteilung: **21.02.2018**
(21) Anmeldenummer: 14808848.7
(22) Anmeldetag: 06.12.2014
(51) Int. Cl.: B62D 21/11, B62D 21/15

(54) **ANBINDUNG EINES FRONTENDS EINES KRAFTFAHRZEUGS AN EINEN HILFSRAHMEN DES KRAFTFAHRZEUGS**
ATTACHMENT OF A FRONT END OF A MOTOR VEHICLE TO A SUB-FRAME OF THE MOTOR VEHICLE
FIXATION D'UNE EXTRÉMITÉ AVANT D'UN VÉHICULE AUTOMOBILE À UN FAUX-CHÂSSIS DU VÉHICULE AUTOMOBILE

(30) Priorität: 14.12.2013 DE 102013021344
(43) Veröffentlichungstag der Anmeldung: 19.10.2016
(73) Patentinhaber: Audi AG, 85045 Ingolstadt (DE)
(72) Erfinder: GROEN, Matthias, 85053 Ingolstadt (DE); SCHMITT, Joachim, 85051 Ingolstadt (DE)
(74) Vertreter: Reichert, Thomas Klaus
(86) Internationale Anmeldenummer: PCT/EP2014/003276
(87) Internationale Veröffentlichungsnummer: WO 2015/086139

(56) Entgegenhaltungen:
- EP-A1- 2 380 782
- EP-A2- 0 926 048
- DE-A1-102006 023 051
- DE-A1-102008 039 138
- DE-A1-102011 108 322
- US-A1- 2011 025 035

## Beschreibung

Die Erfindung betrifft eine Anbindung eines Frontends eines Kraftfahrzeugs an einen Hilfsrahmen des Kraftfahrzeugs gemäß der im Oberbegriff des Patentanspruches 1 angegebenen Art.

Die DE 10 2, sowie EP2380782A1 offenbart ein Frontend eines Kraftfahrzeugs, das über nachgiebige Verbindungsstellen an einer Strebenanordnung abgestützt ist und mit Führungsmitteln, entlang derer das Frontend nach dem Nachgeben der Verbindungsstellen in Folge einer entsprechend hohen unfallbedingten Kraftbeaufschlagung zurück zu bewegen ist. Hierbei sind die Führungsmittel durch Streben des Frontends gebildet, die teleskopartig mit korrespondierenden Stützstreben der Strebenanordnung zusammenwirken.

Der Erfindung liegt die Aufgabe zugrunde, eine Anbindung eines Frontends eines Kraftfahrzeugs an einen Hilfsrahmen des Kraftfahrzeugs gemäß der im Oberbegriff des Patentanspruches 1 angegebenen Art derart weiterzubilden, dass Änderungen an der Radaufhängung ohne weiterführende Änderungen an der Vorderwagenstruktur durchführbar sind.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise ist das Frontend eines. Kraftfahrzeugs über eine in Kraftfahrzeuglängsrichtung betrachtet zwischen Frontend und Hilfsrahmen angeordnete und wirksame Verstelleinrichtung am Hilfsrahmen angebunden. Die Verstelleinrichung ihrerseits umfasst eine frontendseitige Verstelleinheit und eine hilfsrahmenseitige Verstelleinheit und ist derart ausgebildet, dass bei einer entsprechend hohen unfallbedingten Kraftbeaufschlagung die Verstelleinrichtung in Kraftfahrzeuglängsrichtung betrachtet verkürzbar ist.

Erfindungsgemäß ist die hilfsrahmenseitige Verstelleinheit der Verstelleinrichtung an einem am Hilfsrahmen gelagerten Gehäuse angeordnet.

Die erfindungsgemäße Ausgestaltung erweist sich als besonders vorteilhaft, da nunmehr die hilfsrahmenseitige Verstelleinheit der Verstelleinrichtung am Gehäuse angeordnet ist, sodass durch das Gehäuse ausreichend Bauraum am Hilfsrahmen vorgehalten ist, um die für eine Änderung der Radaufhängung notwendigen Komponenten einbauen zu können. Weiterführende Änderungen an der Vorderwagenstruktur, insbesondere eine Änderung der Frontendanbindung sind somit nicht mehr erforderlich.

Um ein Nachrüsten entsprechender, ein Gehäuse aufweisende Hilfsrahmenkonstruktionen zu ermöglichen, ist gemäß einer ersten Ausführungsform der Erfindung vorgesehen, dass die die hilfsrahmenseitige Verstelleinheit der Verstelleinrichtung kraft- und/oder stoffschlüssig am Gehäuse befestigt ist.

Gemäß einer anderen Ausführungsform der Erfindung ist die hilfsrahmenseitige Verstelleinheit der Verstelleinrichtung im Gehäuse integriert bzw. Verstelleinrichtung und Gehäuse bilden eine Baueinheit. Hierdurch ist in vorteilhafter Weise eine besonders kompakte Bauform gewährleistet.

Vorzugsweise ist hierbei das Gehäuse über Schraubverbindungen lösbar am Hilfsrahmengussknoten befestigt. Hierdurch ist eine schnelle Montage/Demontage des Gehäuses gewährleistet.

Gemäß einer besonders vorteilhaften Ausführungsform der Erfindung sind im Gehäuse die je Fahrzeugseite notwendigen Komponenten eines aktiven Stabilisators angeordnet. Hierbei handelt es sich z. B. um zwei Drehsteller und ein entsprechendes Steuergerät zur Steuerung der Drehsteller. Diese Ausführungsform erweist sich als besonders vorteilhaft, da nunmehr eine Integration eines Aufbaustabilisierungssystems ermöglicht ist, ohne dass weiterführende Änderungen der konventionellen Vorderwagenstrukturen durchzuführen sind.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine erfindungsgemäße Anbindung eines Front-ends eines Kraftfahrzeugs an einen Hilfsrah-men in einer Ansicht schräg von oben, und
- Fig. 2: die Anbindung aus Fig. 1 in einer Ansicht von oben.

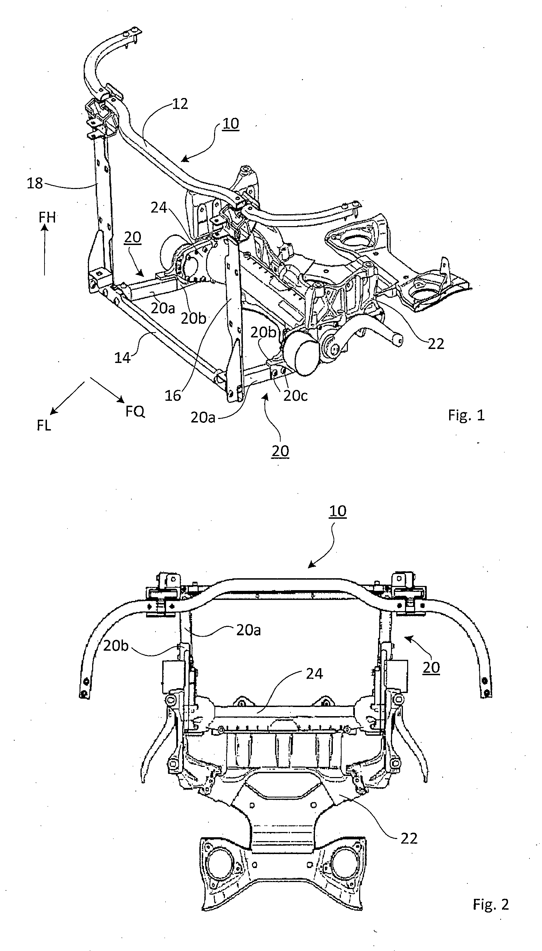

Fig. 1 zeigt ein insgesamt mit dem Bezugszeichen 10 bezeichnetes Frontend eines Kraftfahrzeugs. Das Frontend 10 ist vorliegend rahmenförmig ausgebildet und weist zwei in Fahrzeugquerrichtung FQ ausgerichtete Querträgerelemente 12, 14 sowie zwei in Kraftfahrzeughochrichtung FH verlaufende Strebenelemente 16, 18 auf.

Im Bereich der Verbindungspunkte der Streben. 16, 18 mit dem unteren Querträgerelement 14, ist das Frontend 10 jeweils über eine insgesamt mit dem Bezugszeichen 20 bezeichnete Verstelleinrichtung an einen Hilfsrahmen 22 angebunden.

Hierbei umfasst die Verstelleinrichtung 20 eine dem Frontend 10 zugewandte Verstelleinheit 20a - nachfolgend als frontendseitige Verstelleinheit bezeichnet - und eine dem Hilfsrahmen 22 zugewandte Verstelleinrichtung 20b - nachfolgend als hilfsrahmenseitige Verstelleinrichtung bezeichnet - auf.

Wie Fig. 1 weiter zu entnehmen ist, ist hierbei die frontendseitige Verstelleinheit 20a teleskopartig in die hilfsrahmenseitige Verstelleinheit 20b einschiebbar ausgebildet. Über eine Stiftverbindung 20c zwischen den beiden Verstelleinheiten 20a, 20b ist gewährleistet, dass erst bei einer entsprechend hohen unfallbedingten Kraftbeaufschlagung die frontseitige Verstelleinheit 20a in die hilfsrahmenseitige Verstelleinheit 20b eintaucht und damit eine durch die Verstelleinheit 20 bedingte Verkürzung in Kraftfahrzeuglängsrichtung FL auftritt.

Während die frontendseitige Verstelleinheit 20a jeweils im Bereich des Verbindungspunkts der Strebe 16 bzw. 18 mit dem unteren Querträgerelement 14 am Frontend 10 befestigt ist, sind die jeweiligen in Fahrzeuglängsrichtung FL betrachtet gegenüberliegenden hilfsrahmenseitigen Verstelleinheiten 20b an einem Gehäuse 24 angeordnet.

Bei dem Gehäuse 24 handelt es sich vorliegend um ein Gehäuse, in das die für ein aktives Aufbaustabilisierungssystem notwendigen Komponenten wie Drehsteller und Steuergerät integriert sind und das seinerseits mittels Schraubverbindungen lösbar am Hilfsrahmen 22 befestigt ist.

Da nunmehr erfindungsgemäß die hilfsrahmenseitigen Verstelleinheiten 20b der Verstelleinrichtung 20 am Gehäuse 24 angeordnet sind, ist in vorteilhafter Weise gewährleistet, dass eine einfache Änderung der Radaufhängung ermöglicht ist, ohne das gesamte Vorderwagenkonzept zu ändern.

### Bezugszeichenliste

- 10: Frontend
- 12: Querträgerelement
- 14: Querträgerelement
- 16: Strebenelement
- 18: Strebenelement
- 20: Verstelleinrichtung
- 20a: frontendseitige Verstelleinheit
- 20b: hilfsrahmenseitige Verstelleinheit
- 20c: Stiftverbindung zwischen den Verstelleinheiten
- 22: Hilfsrahmen
- 24: Gehäuse

- FL: Kraftfahrzeuglängsrichtung
- FQ: Kraftfahrzeugquerrichtung
- FH: Kraftfahrzeughochrichtung

## Patentansprüche

1. Anbindung eines Frontends (10) eines Kraftfahrzeugs an einen Hilfsrahmen (22) des Kraftfahrzeugs, bei der das Frontend (10) über eine in Kraftfahrzeuglängsrichtung (FL) betrachtet zwischen Frontend (10) und Hilfsrahmen (22) angeordnete Verstelleinrichtung (20) am Hilfsrahmen (22) angebunden ist, wobei die Verstelleinrichtung (20) eine frontendseitige und eine hilfsrahmenseitige Verstelleinheit (20a, 20b) umfasst, und die Verstelleinrichtung (20) derart ausgebildet ist, dass bei einer entsprechend hohen unfallbedingten Kraftbeaufschlagung die Verstelleinrichtung (20) in Kraftfahrzeuglängsrichtung (FL) betrachtet verkürzbar ist, **dadurch gekennzeichnet, dass** die hilfsrahmenseitige Verstelleinheit (20b) der Verstelleinrichtung (20) an einem am Hilfsrahmen (22) gelagerten Gehäuse (24) angeordnet ist.

2. Anbindung eines Frontends (10) nach Anspruch 1, **dadurch gekennzeichnet, dass** die hilfsrahmenseitige Verstelleinheit (20b) der Verstelleinrichtung (20) kraft- und/oder stoffschlüssig am Gehäuse (24) befestigt ist.

3. Anbindung eines Frontends (10) nach Anspruch 1, **dadurch gekennzeichnet, dass** die hilfsrahmenseitige Verstelleinheit (20b) der Verstelleinrichtung (20) im Gehäuse (24) integriert ist.

4. Anbindung eines Frontends (10) nach Anspruch 1 bis 3, **dadurch gekennzeichnet, dass** das Gehäuse (24) über Schraubverbindungen lösbar an Hilfsrahmengussknoten befestigt ist.

5. Anbindung eines Frontends (10) nach einem der Ansprüche 1 bis 4, **dadurch gekennzeichnete, dass** im Gehäuse (24) die je Fahrzeugseite notwendigen Komponenten eines aktiven Stabilisators angeordnet sind.

6. Anbindung eines Frontends (10) nach Anspruch 5, **dadurch gekennzeichnet, dass** im Gehäuse (24) zwei Drehsteller und ein Steuergerät angeordnet sind.

## Claims

1. Connection of a front end (10) of a motor vehicle to a subframe (22) of the motor vehicle, in which the front end (10) is connected to the subframe (22) via an adjustment device (20) arranged between front end (10) and subframe (22) viewed in the longitudinal direction (FL) of the motor vehicle, wherein the adjustment device (20) has a front end-side and a subframe-side adjustment unit (20a, 20b) and the adjustment device (20) is designed such that in the case of a correspondingly high accident-related force impact, the adjustment device (20), viewed in the longitudinal direction (FL) of the motor vehicle, can be shortened, **characterised in that** the subframe-side adjustment unit (20b) of the adjustment device (20) is arranged on a housing (24) mounted on the subframe (22).

2. Connection of a front end (10) according to claim 1, **characterised in that** the subframe-side adjustment unit (20b) of the adjustment device (20) is fastened to the housing (24) in a force-locking and/or materially-bonded manner.

3. Connection of a front end (10) according to claim 1, **characterised in that** the subframe-side adjustment unit (20b) of the adjustment device (20) is integrated in the housing (24).

4. Connection of a front end (10) according to claims 1 to 3, **characterised in that** the housing (24) is detachably fastened to subframe cast nodes via screw connections.

5. Connection of a front end (10) according to any one of claims 1 to 4, **characterised in that** the components of an active stabiliser required for each vehicle side are arranged in the housing (24).

6. Connection of a front end (10) according to claim 5, **characterised in that** two rotary actuators and a control device are arranged in the housing (24).

## Revendications

1. Fixation d'une extrémité avant (10) d'un véhicule automobile à un faux-châssis (22) du véhicule automobile, dans laquelle l'extrémité avant (10) est fixée au faux-châssis (22) via un dispositif de réglage (20) agencé, considéré dans la direction longitudinale (FL) du véhicule automobile, entre l'extrémité avant (10) et le faux-châssis (22), dans laquelle le dispositif de réglage (20) comprend une unité de réglage côté extrémité avant et côté faux-châssis (20a, 20b) et le dispositif de réglage (20) est conçu en sorte que, lorsqu'il est soumis à une force accidentelle élevée de manière correspondante, le dispositif de réglage (20) puisse se raccourcir dans la direction longitudinale (FL) du véhicule automobile, **caractérisée en ce que** l'unité de réglage côté faux-châssis (20b) du dispositif de réglage (20) est agencé sur un boîtier (24) monté sur le faux-châssis (22).

2. Fixation d'une extrémité avant (10) selon la revendication 1, **caractérisée en ce que** l'unité de réglage côté faux-châssis (20b) du dispositif de réglage (20) est fixé au boîtier (24) par commande par adhérence ou par voie mécanique.

3. Fixation d'une extrémité avant (10) selon la revendication 1, **caractérisée en ce que** l'unité de réglage côté faux-châssis (20b) du dispositif de réglage (20) est intégré au boîtier (24).

4. Fixation d'une extrémité avant (10) selon les revendications 1 à 3, **caractérisée en ce que** le boîtier (24) peut être fixé de manière amovible à des noeuds coulés de faux-châssis via des raccords à vis.

5. Fixation d'une extrémité avant (10) selon l'une quelconque des revendications 1 à 4, **caractérisée en ce que** sont agencés dans le boîtier (24) les composants d'un stabilisateur actif nécessaires à chaque côté du véhicule.

6. Fixation d'une extrémité avant (10) selon la revendication 5, **caractérisée en ce que** sont agencés dans le boîtier (24) deux actionneurs rotatifs et un appareil de commande.
